Europäisches Patentamt

European Patent Office

Office européen des brevets

(19)

(11) Numéro de publication : **0 322 261 B1**

# (12) FASCICULE DE BREVET EUROPEEN

(45) Date de publication du fascicule du brevet :
**22.01.92 Bulletin 92/04**

(51) Int. Cl.⁵ : **B60T 11/10,** B60T 17/08

(21) Numéro de dépôt : **88402839.0**

(22) Date de dépôt : **14.11.88**

(54) **Circuit hydraulique de freinage pour véhicule automobile.**

(30) Priorité : **23.12.87 FR 8717991**

(43) Date de publication de la demande :
**28.06.89 Bulletin 89/26**

(45) Mention de la délivrance du brevet :
**22.01.92 Bulletin 92/04**

(84) Etats contractants désignés :
**DE ES FR GB IT**

(56) Documents cités :
**DE-A- 1 908 282**
**DE-A- 2 059 037**
**DE-A- 3 344 547**
**DE-A- 3 615 046**

(73) Titulaire : **BENDIX EUROPE Services**
**Techniques S.A.**
**126 rue de Stalingrad**
**F-93700 Drancy (FR)**

(72) Inventeur : **De la Broise, Marc**
**Bendix France 126 Rue de Stalingrad**
**F-93700 Drancy (FR)**
Inventeur : **Tanguy, Christian**
**Bendix France 126 Rue de Stalingrad**
**F-93700 Drancy (FR)**
Inventeur : **Kervagoret, Gilbert**
**Bendix France 126 Rue de Stalingrad**
**F-93700 Drancy (FR)**

(74) Mandataire : **Lejet, Christian**
**Bendix Europe Service Techniques Service**
**Brevets 126 rue de Stalingrad**
**F-93700 Drancy (FR)**

## Description

La présente invention est relative à un circuit hydraulique de freinage pour véhicule automobile, du type comprenant un circuit primaire et un circuit secondaire d'alimentation des moteurs de frein associés aux roues du véhicule. Plus particulièrement, l'invention est relative à un tel circuit équipé de moyens assurant la sécurité du freinage en cas de défaillance de l'un des circuits primaire ou secondaire d'alimentation des moteurs de frein.

On connaît de EP-A-0310473 qui est un document selon l'A. 54(3) CBE un circuit hydraulique de freinage à circuits primaire et secondaire en croix pour l'alimentation des moteurs de frein de roues, ce circuit étant équipé d'un dispositif d'antiblocage de roues de type dans lequel les pressions d'un fluide de freinage dans les moteurs de frein des roues avant sont commandées séparément alors que la roue arrière de plus basse adhérence commande l'établissement d'une même pression de fluide dans les moteurs de frein des roues arrière, ces pressions étant gouvernées par une électrovalve d'admission-détente associée respectivement à chacun des moteurs de frein des roues avant et à l'essieu arrière chaque électrovalve comprenant un clapet de détente. Le circuit est réalimenté en période d'antiblocage par une pompe unique reliée directement du côté aspiration au réservoir d'un maître-cylindre tandem.

Le circuit décrit dans le document précité comprend un dispositif de sécurité relié hydrauliquement aux clapets de détente des électrovalves et au côté refoulement de la pompe et il est muni d'un moyen de clapet commandé par la pression de refoulement de la pompe pour isoler les clapets de détente des électrovalves du réservoir du maître-cylindre en freinage normal, ou en cas de défaillance de la pompe, et pour renvoyer le fluide de freinage venu de ces clapets vers le réservoir en période d'antiblocage, quand la pression du fluide refoulée par la pompe atteint un niveau prédéterminé significatif du bon fonctionnement de celle-ci.

Cependant, le dispositif décrit ci-dessus n'est pas conçu pour assurer la sécurité du freinage du véhicule en cas de défaillance d'un des circuits, primaire ou secondaire, d'alimentation des moteurs de frein.

La présente invention a pour but de réaliser un circuit hydraulique de freinage, éventuellement muni d'un dispositif d'antiblocage des roues, qui permet d'assurer la sécurité du freinage du véhicule en cas de défaillance d'un des circuits primaire ou secondaire d'alimentation des moteurs de frein.

La présente invention a aussi pour but de réaliser un tel circuit de freinage qui autorise l'utilisation d'un dispositif d'antiblocage comprenant un minimum d'électrovalves modulatrices de la pression dans les moteurs de frein et qui permet d'équilibrer la pression dans les moteurs de frein des roues arrières au niveau de la plus basse des deux pressions, tant en freinage normal qu'en freinage antibloquant.

Le document DE-A-3344547 décrit un circuit hydraulique ne comprenant qu'un nombre réduit d'électrovalves et assurant la protection automatique de chacun des circuits primaire et secondaire en cas de défaillance. Ce circuit ne présente cependant pas le degré de performance requis pour être mis en oeuvre valablement dans un véhicule automobile.

La présente invention a encore pour but de réaliser un tel circuit équipé d'un seul correcteur pout corriger simultanément la pression des moteurs de frein des roues de l'essieu arrière du véhicule.

On atteint ces buts de l'invention avec un circuit hydraulique de freinage pour véhicule automobile, tel que défini par la première revendication.

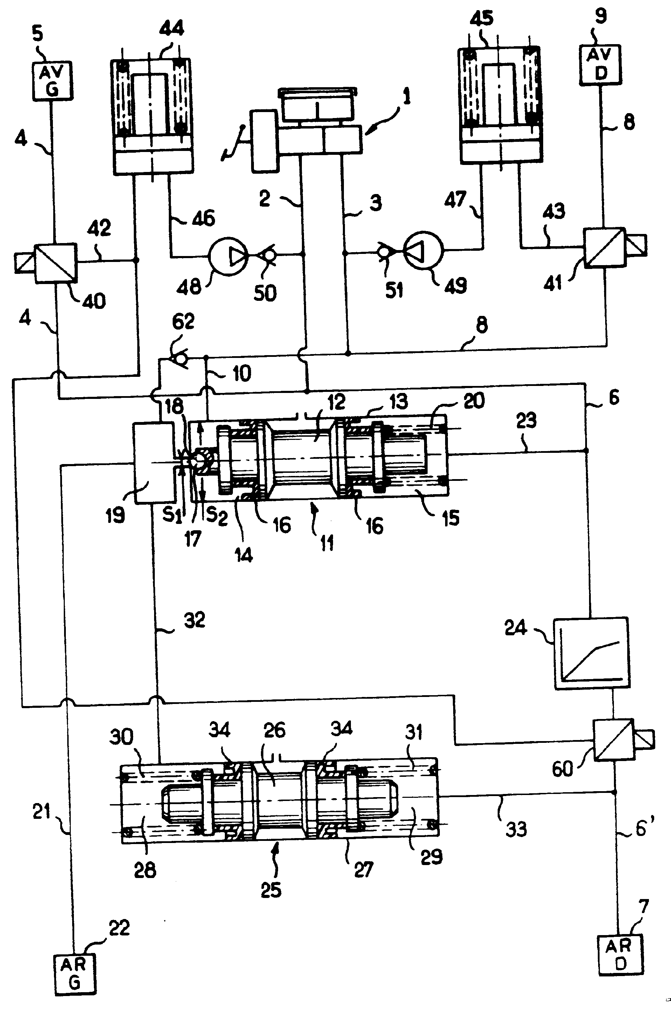

Au dessin annexé, donné seulement à titre d'exemple, la figure unique représente un schéma du circuit de freinage suivant l'invention.

On se réfère au dessin où il apparaît que le circuit suivant l'invention comprend un générateur de pression de freinage (1) constitué par exemple d'un servo-frein associé à un maître-cylindre tandem classique à deux réservoirs, ce générateur étant commandé par la pédale de frein d'un véhicule automobile équipé du circuit suivant l'invention. Le maître-cylindre tandem du générateur (1) commande la mise en pression de deux circuits distincts d'alimentation de moteur de frein associé aux roues du véhicule, un circuit primaire (2) et un circuit secondaire (3), respectivement. Le circuit primaire (2) alimente par une ligne (4) un premier moteur de frein (5) associé à une première roue du véhicule et, par une ligne (6) un deuxième moteur de frein associé à une deuxième roue du véhicule. Les première et deuxième roues sont montées sur l'essieu avant et l'essieu arrière du véhicule respectivement. Sur le mode de réalisation du circuit représenté à la figure, la première roue est la roue avant gauche et la deuxième roue est la roue arrière droite, le circuit primaire adoptant ainsi la configuration diagonale classique. Le circuit secondaire (3) alimente, par l'intermédiaire d'une ligne (8) un troisième moteur de frein (9) associé à une troisième roue du véhicule. Dans le mode de réalisation représenté à la figure, cette troisième roue est la roue avant droite.

Suivant une caractéristique essentielle du circuit de l'invention, le circuit secondaire (3) est aussi connecté par une ligne (10) à une valve d'isolement (11) dont on expliquera le fonctionnement dans la suite. Cette valve d'isolement (11) est essentiellement constituée par un piston (12) mobile dans un alésage (13) entre une première chambre (14) et une deuxième chambre (15). Des coupelles d'étanchéité (16) isolent une chambre annulaire entourant la partie centrale du piston (12) des première et deuxième chambres. Dans la première chambre (14), le piston porte axialement une bille (17) susceptible de venir obturer le siège d'un clapet (18) par lequel la chambre (14) peut communiquer avec une troisième chambre (19). Dans la deuxième chambre (15) est placé un ressort (20) qui charge le piston (12), et donc la bille (17), vers la position de fermeture du clapet (18).

Une ligne (21) partant de la troisième chambre (19) alimente un quatrième moteur de frein (22) associé à une quatrième roue du véhicule. Dans le mode de réalisation représenté cette quatrième roue est la roue gauche de l'essieu arrière du véhicule. Une ligne (23) fait communiquer la deuxième chambre (15) de la valve (11) avec la ligne (6) d'alimentation du moteur de frein (7). On notera encore sur la ligne (6) la présence d'un correcteur de pression classique (24) en aval du raccordement des lignes (6) et (23).

Comme le circuit décrit à la demande de brevet français précitée, le circuit suivant l'invention comprend encore un dispositif (25) pour équilibrer les pressions dans les moteurs de frein (7) et (22) associées aux roues arrière. On pourra se référer à cette demande de brevet pour plus de détail concernant la structure et le fonctionnement de ce dispositif d'équilibrage. En bref le dispositif (25) comprend un piston (26) mobile dans un alésage (27) entre deux chambres (28) et (29) contenant chacune un ressort (30), (31) respectivement, qui maintient au repos le piston (26) dans une position d'équilibre médiane. La première chambre (28) est reliée par une ligne (32) à la troisième chambre associée à la valve (11) tandis que la chambre (29) est reliée par une ligne (33) à la ligne d'alimentation (6') du moteur de frein (7), entre le correcteur (24) et ce moteur de frein. Des coupelles d'échantéité (34) isolent une chambre annulaire entourant la partie centrale du piston (26) vis-à-vis des chambres (28) et (29).

La présente invention s'applique à un circuit de freinage classique aussi bien qu'à un circuit de freinage équipé d'un dispositif d'antiblocage des roues. Cependant, on a représenté à la figure une mise en oeuvre de l'invention dans un circuit équipé d'un tel dispositif d'antiblocage, pour des raisons que l'on expliquera dans la suite. Le dispositif d'antiblocage qui équipe le circuit de freinage suivant l'invention est du type classique à commande indépendante des roues avant et commande combinée des roues arrière. Sur les lignes (4) et (8) d'alimentation des moteurs de frein (5) et (9) respectivement, on trouve ainsi des modulateurs (40) et (41) respectivement, de la pression dans les moteurs de frein (5) et (9), en période de fonctionnement en antiblocage du circuit suivant l'invention. Classiquement chacun des modulateurs (40), (41) peut être constitué par une électrovalve à trois voies et deux positions. Classiquement encore ces modulateurs (40), (41) sont connectés par des lignes (42), (43) respectivement, à des accumulateurs de pression (44), (45) dont les sorties sont connectées par des lignes (46), (47) respectivement, à des pompes (48), (49) respectivement, associées à des clapets anti-retour (50), (51) respectivement, connectés au circuit primaire (2) et au circuit secondaire (3) respectivement, en aval du maître-cylindre du générateur de pression de freinage (1). Les clapets anti-retour (50), (51) empêchent tout reflux de fluide de freinage des circuits primaire et secondaire vers les pompes (48), (49) respectivement.

Pour la commande des pressions dans les moteurs de frein (7) et (22) associés au roues de l'essieu arrière du véhicule, le dispositif d'antiblocage du circuit suivant l'invention comprend un seul modulateur (60) placé sur la ligne d'alimentation du moteur de frein (7) entre le correcteur de pression (24) et le point de raccordement de la ligne (33) venu du dispositif d'équilibrage (25) à la ligne d'alimentation (6') de ce moteur de frein (7). Le modulateur (60) est encore raccordé à l'entrée de l'accumulateur (44).

On notera encore la présence sur une ligne établissant une communication entre le circuit secondaire (3) et la troisième chambre (19), d'un clapet anti-retour (62) dont le rôle sera expliqué dans la suite.

En l'absence de conditions déclenchant la mise en jeu du dispositif d'antiblocage, le circuit de freinage suivant l'invention fonctionne comme suit. Lorsqu'on appuie sur la pédale de frein, la pression établie par le générateur de pression de freinage (1) est transmise aux moteurs de frein (5), (9) et (7) par les lignes (4), (8) et (6) respectivement, les modulateurs (40), (41) et (60) étant alors sans action sur ces lignes. La pression établie dans la ligne (6) est alors aussi transmise par la ligne (23) à la deuxième chambre (15) de la valve (11) et, à travers le correcteur (24) et par la ligne (33), à la deuxième chambre (29) du dispositif d'équilibrage (25). Cette pression, s'ajoutant à celle développée par le ressort (20) dans la chambre (15) de la valve à pour effet de plaquer la bille (17) sur le siège du clapet (18) en empêchant ainsi toute communication entre les chambres (14) et (19), pour couper toute transmission de pression entre le circuit secondaire (3) et le moteur de frein (22). Suivant l'invention, la valve (11) isole donc, en fonctionnement normal du circuit de freinage, le moteur de frein (22) du circuit secondaire (3). Le moteur de frein (22) est alors cependant mis en communication par les lignes (21) et (32) avec la chambre (28) du dispositif d'équilibrage (25). Les ressorts (30), (31) agissant sur le piston (26) du dispositif (25) sont de faible tarage et agissent de manière qu'au repos le piston (26) occupe une position médiane dans l'alésage (27). Dans ces conditions un accroissement de pression dans la ligne (6), éventuellement corrigé par le correcteur (24), est transmis à la chambre (29) pour agir sur le piston (26) qui se déplace vers la gauche (du point de vue de la figure) pour comprimer le fluide contenu dans le chambre (28), qui communique avec le moteur de frein (22) par les lignes (32) et (21). Le déplacement vers la gauche du piston (26) s'arrête lorsqu'il y a équilibre des pressions régnant de part et d'autre du piston, c'est-à-dire lorsque les pressions de fluide dans les moteurs de frein (7) et (22) sont égales. Suivant l'invention la pression dans le moteur de frein (22) est ainsi pilotée par celle établie dans la ligne (6') qui alimente le moteur de frein (7) et on réalise ainsi un équilibre des pressions de freinage dans les moteurs de frein associés aux roues arrière du véhicule ce qui est favorable au maintien de la directibilité de celui-ci, comme cela est bien connu dans la technique.

Au défreinage, le dégonflage du moteur de frein (22) est facilité par la présence du clapet anti-retour (62) communiquant avec la chambre (19). La pression résiduelle dans le moteur de frein (22) au défreinage peut alors être rendue très faible (inférieure à 0,5 bar par exemple).

Suivant la présente invention, le tarage du ressort (20) de la valve (11) provoque une ouverture du clapet (18) pour une valeur prédéterminée de pression faible, voisine de 5 bars par exemple.

Ainsi, en cas de défaillance du circuit primaire (2), le générateur de pression de freinage (1) continue d'alimenter le circuit secondaire (3) et, après ouverture du clapet (18) et déplacement en butée à droite (du point de vue de la figure) du piston (12), alimente aussi le moteur de frein (22) associé à la roue arrière gauche, à travers la troisième chambre (19) associée à la valve (11). Ainsi, suivant l'invention, malgré la défaillance du circuit primaire (2), l'alimentation en fluide de freinage sous pression du circuit secondaire complet reste néanmoins assurée. Dans la situation examinée ci-dessus, il n'y a plus de limitation de pression dans le moteur de frein (22) associé à la roue arrière gauche, ce qui donne une efficacité maximale au freinage de secours.

A l'inverse, s'il y a défaillance du circuit secondaire (3) en amont de la valve d'isolement (11), la roue arrière gauche continuera à être freinée par le moteur de frein (22). S'il y a défaillance du circuit de freinage en aval de la valve d'isolement (11), dans les lignes (21) ou (32) par exemple, c'est la roue avant droite qui continue à bénéficier d'un freinage.

Examinons maintenant le fonctionnement du circuit suivant l'invention lorsque le dispositif d'antiblocage du circuit est mis en jeu à la suite de la détection d'une condition de blocage imminent d'une des roues du véhicule. En l'absence de défaillance des circuits primaire et secondaire, le dispositif réagit alors indépendamment sur les deux roues de l'essieu avant, comme il est classique, et, par l'intermédiaire du modulateur (60), à la fois sur les deux roues de l'essieu arrière, en réponse à une détection de blocage imminent sur l'une de ces deux roues, le dispositif d'équilibrage (25) établissant alors une égalité de pression de freinage modulée dans les moteurs de frein des deux roues arrière, la pression s'établissant alors au niveau de celle exigée pour empêcher le blocage de la roue arrière de plus basse adhérence.

Si, alors que le dispositif d'antiblocage du circuit suivant l'invention est actif, il y a défaillance du circuit primaire (2), on observera encore une alimentation du moteur de frein (22) par le circuit secondaire grâce à la commutation de la valve (11), ceci encore sans limitation de pression dans le moteur de frein (22). On obtient ainsi une efficacité maximale du freinage de secours même s'il y a blocage de l'une ou des deux roues associées au circuit secondaire, la directibilité et la stabilité du véhicule étant alors assurés par les roues associées à l'autre circuit, qui ne sont pas freinées.

A l'inverse, s'il y a défaillance du circuit secondaire en amont ou en aval de la valve d'isolement (11), la situation s'établie comme décrit ci-dessus pour le fonctionnement du circuit suivant l'invention en l'absence de mise en route du dispositif d'antiblocage.

Le circuit suivant l'invention permet de prévoir une gestion du fonctionnement du dispositif d'antiblocage qui est fonction des défaillances de l'un ou l'autre des circuits primaire ou secondaire.

Comme on l'a indiqué plus haut, il est clair que l'invention trouve application dans un circuit de freinage équipé ou non d'un dispositif d'anti-blocage. Cependant, dans le cas où l'invention est appliquée à un circuit équipé d'un tel dispositif, on observe l'apport des avantages suivant :

— le dispositif comprend un nombre de modulateurs de pression réduit, trois en l'occurence,

— un correcteur de freinage unique est suffisant pour l'ensemble de l'essieu arrière,

— une défaillance du circuit primaire est heureusement compensée par un actionnement sans limitation de pression du moteur de frein associé à la roue arrière gauche,

— une défaillance du circuit secondaire est atténuée par la mise en jeu de trois des moteurs de frein sur quatre.

Bien entendu l'invention n'est pas limitée au mode de réalisation décrit et représenté qui n'a été donné qu'à titre d'exemple, et qui assure le freinage de quatre roues réparties sur les deux essieux d'un véhicule de tourisme. On ne s'écarte pas du domaine de l'invention en appliquant celle-ci à un véhicule poids lourds comprenant plus de deux essieux et en démultipliant sur les essieux de ce véhicule autres que l'essieu avant, l'agencement décrit ci-dessus pour l'essieu arrière d'un véhicule de tourisme. L'invention n'est pas limitée non plus à un circuit dans lequel la roue arrière gauche est normalement isolée du circuit secondaire et le circuit décrit pourrait être retourné dans son orientation sans que l'on s'écarte de l'invention.

La présente invention permet de réaliser un circuit de freinage de fiabilité améliorée et qui se prête à l'incorporation d'un dispositif d'antiblocage comportant un nombre réduit de modulateurs et un seul correcteur de pression, donc peu coûteux, s'adaptant particulièrement bien à une addition sur un circuit de freinage classique à deux circuits d'alimentation indépendants en X.

## Revendications

1. Circuit hydraulique de freinage pour véhicule automobile comprenant :
— un générateur de pression pour un fluide de freinage.
— un circuit primaire commandé par ce générateur pour alimenter des premier et deuxième moteurs de frein associés à des première et deuxième roues, respectivement, montées en position diagonale sur des premier et deuxième essieux, respectivement.
— un circuit secondaire commandé par le générateur pour alimenter un troisième moteur de frein associé à une troisième roue montée sur le premier essieu, suivant l'autre position diagonale, une quatrième roue étant montée sur le deuxième essieu suivant cette autre position diagonale et associée à un quatrième moteur de frein.
— un dispositif d'équilibrage des pressions dans les moteurs de frein des roues du deuxième essieu, et
— une valve (11) sensible à la pression du fluide dans le circuit primaire pour connecter le quatrième moteur de frein au circuit secondaire en cas de défaillance du circuit primaire, la dite valve (11) comprenant un piston (12) mobile dans un alésage (13) entre une première chambre (14) fermée par un clapet (18) commandant la mise en communication du quatrième moteur de frein avec le circuit secondaire et une deuxième chambre de l'alésage qui communique avec le circuit primaire, le piston étant mobile dans cet alésage entre une première position où il ferme le clapet pour couper toute communication entre le quatrième moteur de frein et le circuit secondaire quand la pression du fluide dans le circuit primaire est supérieure à une valeur prédéterminée et une deuxième position où le piston autorise l'ouverture du clapet pour mettre en communication le quatrième moteur de frein et le circuit secondaire, quand la pression du fluide dans le circuit primaire tombe en dessous de la valeur prédéterminée.

2. Circuit conforme à la revendication 1, caractérisé en ce qu'un ressort de tarage (20) est placé dans la deuxième chambre (15) de la valve (11) pour charger le piston (12) vers le clapet (18), la raideur du ressort étant telle que le clapet s'ouvre quand la pression du fluide dans cette chambre devient inférieure à la valeur prédéterminée.

3. Circuit conforme à la revendication 2, caractérisé en ce que la valve (11) est connectée d'une part au circuit primaire par la deuxième chambre (15) et d'autre part au circuit secondaire et au quatrième moteur de frein (22) par la première chambre (14), en amont du dispositif d'équilibrage (25).

4. Circuit conforme à l'une quelconque des revendications 2 et 3, caractérisé en ce que le clapet (18) commande la communication entre la première chambre (14) et une troisième chambre (19) connectée à la fois au dispositif d'équilibrage (25) et au quatrième moteur de frein (22), le circuit secondaire étant connecté à la première chambre (14) de la valve (11).

5. Circuit conforme à la revendication 4, caractérisé en ce qu'un clapet anti-retour (62) fait communiquer la troisième chambre (19) et le circuit secondaire pour autoriser le vidage complet du quatrième moteur de frein au défreinage, en fonctionnement normal.

6. Circuit conforme à l'une quelconque des revendications précédentes, caractérisé en ce qu'il comprend un correcteur de pression (24) agissant sur les moteurs de frein du deuxième essieu, ce correcteur étant connecté dans le circuit primaire entre les connections de la valve (11) et du dispositif d'équilibrage (25) à ce circuit.

7. Circuit conforme à l'une quelconque des revendications précédentes, caractérisé en ce qu'il comprend un dispositif d'antiblocage des roues comprenant un modulateur de pression de freinage associé à chacun des moteurs de frein des roues du premier essieu et un troisième modulateur (60) de pression de freinage associé au moteur de frein (7) de la deuxième roue montée sur le deuxième essieu, ce troisième modulateur (60) étant agencé dans le circuit primaire en amont d'une ligne (33) raccordant le dispositif d'équilibrage (25) à une ligne d'alimentation (6') du deuxième moteur de frein.

8. Circuit conforme à l'ensemble des revendications 6 et 7, caractérisé en ce que le troisième modulateur (60) est placé dans le circuit primaire entre la sortie du correcteur de pression (24) et une ligne (33) raccordant le dispositif d'équilibrage (25) à une ligne d'alimentation (6') du deuxième moteur de frein.

## Patentansprüche

1. Hydraulikbremskreis für Kraftfahrzeug, mit :
— einem Druckgenerator für ein Bremsfluid,
— einem Primärkreis, der von diesem Generator gesteuert wird, um einen ersten und einen zweiten Bremsmotor zu versorgen, die einem ersten bzw. einem zweiten Rad zugeordnet sind, die an einer ersten bzw. einer zweiten Achse in diagonaler Beziehung angebracht sind,
— einem Sekundärkreis, der von dem Generator gesteuert wird, um einen dritten Bremsmotor zu versorgen, der einem dritten Rad zugeordnet ist, das an der ersten Achse an der anderen diagonalen Position angebracht ist, wobei an der zweiten Achse entsprechend dieser anderen diagonalen Position ein viertes Rad angebracht ist, dem ein vierter Bremsmotor zugeordnet ist,

— einer Einrichtung zum Ausgleichen des Drucks in den Bremsmotoren der Räder der zweiten Achse und

— einem Ventil (11), das auf den Fluiddruck im Primärkreis anspricht, um bei einem Ausfall des Primärkreises den vierten Bremsmotor mit dem Sekundärkreis zu verbinden, wobei das Ventil (11) einen Kolben (12) aufweist, der in einer Bohrung (13) zwischen einer ersten Kammer (14), die von einer die Herstellung einer Verbindung zwischen dem vierten Bremsmotor und dem Sekundärkreis steuernden Klappe (18) verschlossen wird, und einer zweiten Kammer der Bohrung, die mit dem Primärkreis in Verbindung steht, beweglich ist, wobei der Kolben in dieser Bohrung zwischen einer ersten Position, in der er die Klappe verschließt, um jegliche Verbindung zwischen dem vierten Bremsmotor und dem Sekundärkreis zu unterbrechen, wenn der Fluiddruck im Primärkeis oberhalb eines vorgegebenen Wertes liegt, und einer zweiten Position, in der der Kolben die Öffnung der Klappe zuläßt, um zwischen dem vierten Bremsmotor und dem Sekundärkreis eine Verbindung herzustellen, wenn der Fluiddruck im Primärkreis unter den vorgegebenen Wert abfällt, beweglich ist.

2. Kreis gemäß Anspruch 1, dadurch gekennzeichnet, daß in der zweiten Kammer (15) des Ventils (11) eine Ausgleichfeder (20) angeordnet ist, um den Kolben (12) gegen die Klappe (18) vorzubelasten, wobei die Federhärte derart ist, daß sich die Klappe öffnet, wenn der Fluiddruck in dieser Kammer kleiner als der vorgegebene Wert wird.

3. Kreis gemäß Anspruch 2, dadurch gekennzeichnet, daß das Ventil (11) einerseits über die zweite Kammer (15) mit dem Primärkreis und andererseits über die erste Kammer (14) an der Einlaßseite der Ausgleichsvorrichtung (25) mit dem Sekundärkreis und mit dem vierten Bremsmotor (22) verbunden ist.

4. Kreis gemäß einem der Ansprüche 2 und 3, dadurch gekennzeichnet, daß die Klappe (18) die Verbindung zwischen der ersten Kammer (14) und einer dritten Kammer (19) steuert, wobei die dritte Kammer (19) gleichzeitig mit der Ausgleichseinrichtung (25) und mit dem vierten Bremsmotor (22) verbunden ist und wobei der Sekundärkreis mit der ersten Kammer (14) des Ventils (11) verbunden ist.

5. Kreis gemäß Anspruch 4, dadurch gekennzeichnet, daß ein Rückschlagventil (62) die dritte Kammer (19) mit dem Sekundärkreis verbindet, um während der normalen Funktion beim Lösen der Bremsen die vollständige Entleerung des vierten Bremsmotors zuzulassen.

6. Kreis gemäß einem der vorangehenden Ansprüche, dadurch gekennzeichnet, daß er eine Druck-Korrektureinrichtung (24) umfaßt, die auf die Bremsmotoren der zweiten Achse wirkt und im Primärkreis zwischen die Verbindungen des Ventils (11) und der Ausgleichseinrichtung (25) mit diesem Kreis geschaltet ist.

7. Kreis gemäß einem der vorangehenden Ansprüche, dadurch gekennzeichnet, daß er eine Rad-Antiblockiereinrichtung umfaßt, die für jeden Bremsmotor der Räder der ersten Achse einen Bremsdruckmodulator und für den Bremsmotor (7) des an der zweiten Achse angebrachten zweiten Rades einen dritten Bremsdruckmodulator (60) umfaßt, wobei dieser dritte Modulator (60) im Primärkreis an der Einlaßseite einer Leitung (33), die die Ausgleichseinrichtung (25) mit einer Versorgungsleitung (6') des zweiten Bremsmotors verbindet, angeordnet ist.

8. Kreis gemäß der Gesamtheit der Ansprüche 6 und 7, dadurch gekennzeichnet, daß der dritte Modulator (60) im Primärkreis zwischen dem Ausgang der Druck-Korrektureinrichtung (24) und einer Leitung (33), die die Ausgleichseinrichtung (25) mit einer Versorgungsleitung (6') des zweiten Bremsmotors verbindet, angeordnet ist.

## Claims

1. Hydraulic brake circuit for a motor vehicle, comprising

— a pressure generator for a brake fluid,

— a primary circuit controlled by said generator to feed first and second brake motors associated with first and second wheels respectively, which are mounted in diagonal positions on first and second axles respectively,

— a secondary circuit controlled by the generator to feed a third brake motor associated with a third wheel mounted on the first axle in the other diagonal position, a fourth wheel being mounted on the second axle opposite said other diagonal position and being associated with a fourth brake motor,

— a device balancing the pressures in the brake motors of the wheels of the second axle, and

— a valve (11) sensitive to the fluid pressure in the primary circuit to connect the fourth brake motor to the secondary circuit in the event of the failure of the primary circuit, the said valve (11) comprising a piston (12) movable in a bore (13) between a first chamber (14) closed by a valve (18) controlling the establishment of communication between the fourth brake motor and the secondary circuit, and a second chamber of the bore in communication with the primary circuit, the piston being movable in said bore between a first position, in which it closes the valve to cut off all communication between the fourth brake motor and the secondary circuit when the fluid pressure in the primary circuit is higher than a predetermined value, and a second position in which the piston allows the opening of the valve to establish communication between the fourth brake motor and the secondary circuit when the fluid pressure in the primary circuit falls below the predetermined value.

2. Circuit according to Claim 1, characterized in that a calibrating spring (20) is disposed in the second chamber (15) of the valve (11) to load the piston (12) in the direction of the valve (18), the stiffness of the spring being such that the valve opens when the fluid pressure in said chamber becomes lower than the predetermined value.

3. Circuit according to Claim 2, characterized in that the valve (11) is connected on the one hand to the primary circuit by the second chamber (15) and on the other hand to the secondary circuit and to the fourth brake motor (22) by the first chamber (14), upstream of the balancing device (25).

4. Circuit according to either of Claims 2 and 3, characterized in that the valve (18) controls communication between the first chamber (14) and a third chamber (19) connected both to the balancing device (25) and to the fourth brake motor (22), the secondary circuit being connected to the first chamber (14) of the valve (11).

5. Circuit according to Claim 4, characterized in that a non-return valve (62) brings the third chamber (19) and the secondary circuit into communication in order to allow complete emptying of the fourth brake motor when braking ends, in normal operation.

6. Circuit according to any one of the preceding claims, characterized in that it contains a pressure corrector (24) acting on the brake motors of the second axle, said corrector being connected in the primary circuit between the connections of the valve (11) and of the balancing device (25) to said circuit.

7. Circuit according to any one of the preceding claims, characterized in that it contains an anti-wheel-lock device comprising a brake pressure modulator associated with each of the brake motors of the wheels of the first axle and a third brake pressure modulator (60) associated with the brake motor (7) of the second wheel mounted on the second axle, said third modulator (60) being disposed in the primary circuit upstream of a line (33) connecting the balancing device (25) to a line (6') feeding the second brake motor.

8. Circuit according to Claims 6 and 7 taken together, characterized in that the third modulator (60) is disposed in the primary circuit between the outlet of the pressure corrector (24) and a line (33) connecting the balancing device (25) to a line (6') feeding the second brake motor.